# DEMANDE DE BREVET EUROPEEN

(11) **EP 1 260 911 A1**
(43) Date de publication de la demande: **27.11.2002**
(21) Numéro de dépôt: 02076520.2
(22) Date de dépôt: 18.04.2002
(51) Int. Cl.: G06F 17/21

(54) **Structure de données interne pour application destinée à s'interfacer avec une interface pour un document de type HTML ou XML**

(30) Priorité: 27.04.2001 FR 0105767
(71) Demandeur: Koninklijke Philips Electronics N.V., 5621 BA Eindhoven (NL)
(72) Inventeur: Devillers, Sylvain, 75008 Paris (FR)
(74) Mandataire: de la Fouchardière, Marie-Noelle

(57) **Abrégé**

L'invention propose une structure de données interne, écrite dans un langage de programmation objet, et qui est destinée à être instanciée pour fournir une représentation interne de donnée manipulable par un programme d'une application. Cette structure interne de données comporte une classe générique abstraite, et d'autres classes qui héritent toutes de ladite classe générique abstraite. Cette classe générique abstraite contient une méthode générique d'écriture d'un noeud dans une interface pour un document du genre HTML ou XML, et/ou une méthode générique de lecture d'un noeud d'une interface associée à un document du genre HTML ou XML.

Ainsi, l'application est capable en entrée de générer une représentation interne à partir une interface associée à un document du genre HTML ou XML par instanciation de ladite structure de données interne, et d'écrire une interface pour document de type HTML ou XML en sortie, à partir d'une représentation interne de données.

## Description

### Domaine de l'invention

L'invention concerne une structure interne de données écrite dans un langage de programmation objet, comportant une pluralité de classes destinées à être instanciées, pour générer une représentation interne d'un document du genre HTML ou XML faisant partie d'une famille de documents, en lisant une interface associée audit document et constituée d'une arborescence de noeuds.

L'invention concerne aussi un procédé d'instanciation d'une telle structure interne de données à partir d'une interface associée à un document du genre HTML ou XML, faisant partie d'une certaine famille de documents.

L'invention concerne aussi un équipement électronique comportant des moyens de mise en oeuvre d'un tel procédé d'instancation.

L'invention concerne aussi un programme comportant des instructions permettant de mettre en oeuvre un tel procédé d'instanciation, lorsque ledit programme est exécuté par un processeur.

L'invention concerne également une structure interne de données écrite dans un langage de programmation objet, comportant une pluralité de classes destinées à être instanciées pour générer une représentation interne de données manipulable par un programme d'application qui est lui-même destiné à écrire une interface pour un document du genre HTML ou XML faisant partie d'une famille de documents, ladite interface étant constituée d'une arborescence de noeuds.

L'invention concerne aussi un procédé d'écriture d'une interface pour un document du genre HTML ou XML faisant partie d'une certaine famille de documents, à partir d'une représentation interne de données qui est une instance d'une telle structure interne de données.

L'invention concerne aussi un équipement électronique comportant des moyens de mise en oeuvre d'un tel procédé d'écriture.

L'invention concerne aussi un programme comportant des instructions permettant de mettre en oeuvre un tel procédé d'écriture, lorsque ledit programme est exécuté par un processeur.

L'invention a d'importantes applications dans le domaine de la structuration de données et de la manipulation de données préalablement structurées. Elle s'applique avantageusement dans le contexte de l'Internet, par exemple aux équipements de communication mobiles, ou aux équipements de télévision.

### Arrière plan technologique de l'invention

Une interface pour un document du genre HTML ou XML est par exemple définie dans la spécification « Document Object Model (DOM), level 1 specification, version1.0, October 1, 1998» définie par le consortium W3C. Cette spécification définit une structure arborescente orientée objet, appelée DOM, permettant de modéliser un document du genre HTML ou XML. Les noeuds de cette structure arborescente représentent des objets qui ont une identité et des fonctions (en programmation objet, de telles fonctions, qui sont attachées à des objets, sont appelées méthodes). Les méthodes définies dans la spécification DOM permettent de naviguer dans la structure DOM et de la manipuler (accès à un noeud, modification, suppression, adjonction d'un noeud...).

La structure DOM a été proposée pour servir d'interface entre un document du genre HTML ou XML et une application qui a besoin d'accéder au contenu dudit document, et/ou qui doit générer un tel document.

Toutefois, la structure DOM est difficile à manipuler. En général, plutôt que de manipuler directement l'interface DOM, les applications manipulent une représentation interne de données instanciée à partir d'une structure interne de données qui leur est propre.

Ces applications peuvent utiliser, en entrée, une interface DOM pour récupérer le contenu d'un document du genre HTML ou XML nécessaire à l'instanciation d'une représentation interne de données.

Inversement, en sortie, elles peuvent générer une interface DOM à partir d'une représentation interne de données, pour permettre ensuite de produire un document du genre HTML ou XML.

### Résumé de l'invention

L'invention a notamment pour but de proposer une structure interne de données particulièrement avantageuse. Dans un premier mode de réalisation, une structure interne de données selon l'invention comporte une pluralité de classes destinées à être instanciées, pour générer une représentation interne d'un document du genre HTML ou XML faisant partie d'une famille de documents, en lisant une interface associée audit document et constituée d'une arborescence de noeuds, et elle est caractérisée en ce qu'elle comporte :
- une classe générique qui contient au moins une méthode générique de lecture d'un noeud d'une telle interface, pour remplir un objet instance d'une classe de ladite structure interne de données,
- une ou plusieurs classes qui héritent de ladite classe générique et qui obéissent à des règles de dénomination et de correspondance établies par rapport à ladite famille de documents, lesdites règles de dénomination et de correspondance étant utilisées par ladite méthode générique de lecture pour lire ladite interface.

Dans un second mode de réalisation, une structure interne de données comporte une pluralité de classes destinées à être instanciées pour générer une représentation interne de données manipulable par un programme d'application qui est lui-même destiné à écrire une interface pour un document du genre HTML ou XML faisant partie d'une famille de documents, et elle est caractérisée en ce qu'elle comporte :
- une classe générique qui contient une méthode générique d'écriture d'un noeud dans une telle interface, à partir d'une instance d'une classe de ladite structure interne de données,
- une ou plusieurs classes qui héritent de ladite classe générique et qui obéissent à des règles de dénomination et de correspondance établies par rapport à ladite famille de documents, lesdites règles de dénomination et de correspondance étant utilisées par ladite méthode générique d'écriture pour écrire ladite interface.

Avantageusement, ladite classe générique comporte à la fois une méthode générique de lecture d'un noeud d'une telle interface pour remplir un objet instance d'une classe de ladite structure interne de données, et une méthode générique d'écriture d'un noeud dans une telle interface, à partir d'une instance d'une classe de ladite structure interne de données.

Ainsi l'invention définit une classe générique abstraite dont héritent toutes les autres classes, cette classe générique abstraite contenant une méthode générique d'écriture d'un noeud dans une interface pour un document du genre HTML ou XML, et/ou une méthode générique de lecture d'un noeud d'une interface associée à un document du genre HTML ou XML.

Le mécanisme d'héritage est un mécanisme classique des langages de programmation objet. Il permet en particulier à une classe de contenir implicitement les méthodes qui sont définies dans la classe dont elle hérite. L'invention permet donc de définir une seule méthode d'écriture et/ou une seule méthode de lecture, qui sont des méthodes génériques applicables à n'importe quel noeud d'une interface, au niveau d'une classe qui est une classe abstraite. Les objets de la représentation interne de données sont des instances de classes qui héritent de cette classe abstraite de telle sorte qu'ils contiennent tous lesdites méthodes de lecture et/ou d'écriture, par héritage.

L'écriture de la structure interne de données est ainsi considérablement simplifiée.

Dans un exemple de réalisation particulièrement simple de l'invention, lesdits documents du genre HTML ou XML comportant un ou plusieurs éléments qui comportent un ou plusieurs sous-éléments et/ou un ou plusieurs attributs et/ou du contenu, la ou lesdites classes comportent une ou plusieurs variables d'instance et obéissent aux règles de dénomination et de correspondance suivantes:
- une classe de ladite structure interne correspond à un élément d'un document du genre HTML ou XML, ladite classe et ledit élément ayant un même nom,
   et dans ladite classe :
- une variable d'instance ayant un nom réservé correspond au contenu dudit élément,
- une variable d'instance constituée par un objet instance d'une classe héritant de la classe générique, correspond à un sous-élément dudit élément, ledit sous-élément et la classe dont l'objet est une instance ayant un même nom,
- une variable d'instance constituée par un tableau d'objets instances d'une classe héritant de la classe générique, correspond à une liste de sous-éléments dudit élément, lesdits sous-éléments et la classe dont les objets sont des instances ayant un même nom,
- les autres variables d'instance correspondent à des attributs dudit élément, un attribut et la variable d'instance à laquelle il correspond ayant un même nom.

Un autre but de l'invention est de proposer un procédé d'écriture d'une interface pour un document du genre HTML ou XML à partir d'une représentation interne de données qui est une instance d'une telle structure interne de données. Ledit procédé d'écriture consiste à parcourir ladite représentation interne de données objet par objet, et à appliquer ladite méthode générique d'écriture à chaque objet de ladite représentation.

Un autre but de l'invention est de proposer un procédé d'instanciation d'une structure interne de données à partir d'une interface associée à un document du genre HTML ou XML, pour générer une représentation interne dudit document. Ledit procédé d'instanciation consiste à parcourir ladite structure interne de données classe par classe, pour instancier lesdites classes, en appliquant ladite méthode générique de lecture à chaque objet instancié.

### Brève description des dessins

L'invention sera mieux comprise et d'autres détails apparaîtront dans la description qui va suivre en regard des dessins annexés qui sont donnés à titre d'exemples non limitatifs et dans lesquels :
- la figure 1 est un schéma en blocs représentant un exemple d'interfaçage entre un document du genre HTML ou XML et une application,
- la figure 2 est une représentation schématique d'une structure interne de données selon l'invention,
- la figure 3 est un schéma en blocs d'un organigramme d'une méthode générique d'écriture selon l'invention,
- la figure 4 est un schéma en blocs d'un organigramme d'une méthode générique de lecture selon l'invention,
- la figure 5 est un schéma d'un exemple d'équipement selon l'invention.

### Description d'un mode de réalisation préférentiel de l'invention

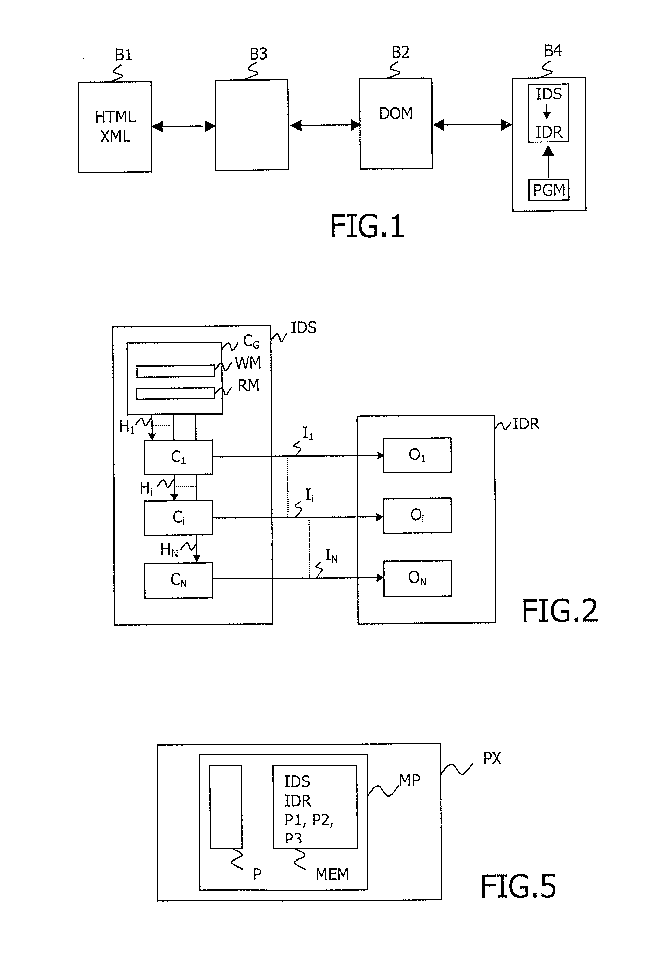

La figure 1 est un schéma comportant quatre blocs B1 à B4 et représentant un exemple d'interfaçage entre un document du genre HTML ou XML et une application. Le bloc B1 représente un document du genre HTML ou XML. Le bloc B2 représente une interface pour un document du genre HTML ou XML. Cette interface est par exemple constituée par une structure conforme à la spécification DOM. Le bloc B3 représente un analyseur syntaxique qui permet de lire un document du genre HTML ou XML afin de générer une interface pour ledit document du genre HTML ou XML. A l'inverse, l'analyseur syntaxique permet aussi de générer un document du genre HTML ou XML à partir d'une interface pour document du genre HTML ou XML.

Le bloc B4 représente une application qui contient une structure interne de données IDS et au moins un programme d'application PGM destiné à manipuler une représentation interne de données IDR qui est une instance de la structure interne de données IDS.

La structure interne de données IDS décrit les caractéristiques d'une certaine famille de documents du genre HTML ou XML (les documents qui font partie d'une même famille répondent à certain nombre de contraintes qui peuvent s'exprimer dans un modèle de document par exemple une « DTD » dans le langage XML, ou un « schema » dans le langage XML-schema ; la structure interne de données décrit ces contraintes).

La structure interne de données est prévue pour permettre de récupérer le contenu d'un document du genre HTML ou XML appartenant à ladite famille, dans une interface associée audit document du genre HTML ou XML, lors de l'instanciation d'une représentation interne de données IDR. Elle est aussi prévue pour permettre de générer en sortie une interface pour document du genre HTML ou XML appartenant à ladite famille, à partir d'une représentation interne de données.

A titre d'exemple, le document représenté par le bloc B1 peut être un document XML représentant un fichier au format JPEG 2000. Dans ce cas, la structure IDS est une description dudit format JPEG 2000. Lors de l'instanciation de cette structure interne de données, le contenu du fichier JPEG 2000 est récupéré dans l'interface DOM associée au document XML qui représente ledit fichier JPEG 2000.

Sur la figure 2, on a représenté schématiquement un exemple préférentiel de structure interne de données IDS et une représentation interne de données IDR qui est une instance de cette structure interne de données IDS.

La structure interne de données IDS est écrite dans un langage de programmation objet tel que le langage C++ ou la langage JAVA. Elle comporte une classe abstraite générique C_{G} qui contient une méthode générique d'écriture WM et une méthode générique de lecture RM. Elle comporte aussi une pluralité de classes C₁, ...Cᵢ,..., C_{N} qui héritent de la classe générique C_{G}. Sur la figure 2, ces relations d'héritage sont représentées par des flèches H₁, ...,Hᵢ, ..., H_{N}.

La représentation interne de données IDR comporte une pluralité d'objets O₁, ..., Oᵢ, ..., O_{N} qui sont des instances des classes C₁, ...Cᵢ,..., C_{N}. L'instanciation des objets O₁, ..., Oᵢ, ..., O_{N} est symbolisée par des flèches I₁, ..., Iᵢ, ..., I_{N}. Les objets O₁, ..., Oᵢ, ..., O_{N} étant des instances de classes qui héritent de la classe générique abstraite C_{G}, ils contiennent les méthodes d'écriture WM et de lecture RM qui sont définies dans la classe générique C_{G}.

Conformément à l'invention, les classes C₁, ...Cᵢ,..., C_{N} obéissent à des règles de dénomination et de correspondance établie par rapport à ladite famille de documents. Ces règles de dénomination et de correspondance sont utilisées par les méthodes génériques d'écriture et de lecture WM et RM pour écrire et pour lire une interface pour ledit document du genre HTML ou XML.

D'une façon générale, un document du genre HTML ou XML comporte un ou plusieurs éléments qui comportent un ou plusieurs sous-éléments et/ou un ou plusieurs attributs et/ou du contenu.

Par ailleurs, en programmation objet, une classe est susceptible de comporter une ou plusieurs variables d'instance, chaque variable d'instance ayant un nom et un type. Dans la suite de la description, on considèrera quatre catégories de variables d'instance:
- les variables d'instance de type chaîne de caractères ayant un nom réservé (dans la suite de la description ce nom réservé est « data »),
- les variables d'instance de type objet,
- les variables d'instance de type tableau d'objets,
- les autres variables d'instance ayant un type primitif, par exemple les variables d'instance de type entier, de type flottant ou de type chaîne de caractères portant un nom différent dudit nom réservé.

Dans un mode de réalisation avantageux de l'invention les classes de la structure interne de données obéissent aux règles de dénomination et de correspondance suivantes :
- chaque classe de ladite structure interne correspond à un élément d'un document du genre HTML ou XML, ladite classe et ledit élément ayant un même nom,
   et dans ladite classe :
- une variable d'instance de type chaîne de caractères, ayant ledit nom réservé correspond au contenu dudit élément,
- une variable d'instance constituée par un objet instance d'une classe héritant de la classe générique, correspond à un sous-élément dudit élément, ledit sous-élément et la classe dont l'objet est une instance ayant un même nom,
- une variable d'instance constituée par un tableau d'objets instances d'une classe héritant de la classe générique, correspond à une liste de sous-éléments dudit élément, lesdits sous-éléments et la classe dont les objets sont des instances ayant un même nom,
- les autres variables d'instance correspondent à des attributs dudit élément, un attribut et la variable d'instance à laquelle il correspond ayant un même nom.

Les règles de dénomination et de correspondance qui viennent d'être énoncées vont maintenant être illustrées en donnant un exemple de document XML, et en décrivant les classes d'une structure interne de données destinée à être instanciée pour générer une représentation interne d'un tel document:

### Exemple de document XML :

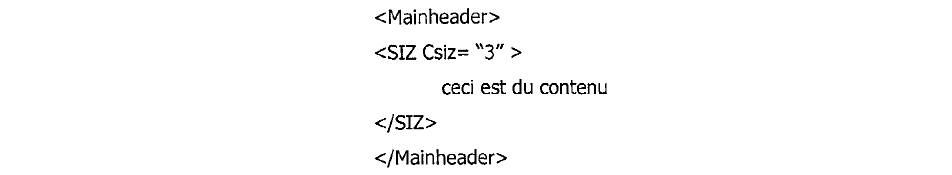

La structure interne de données correspondante comporte deux classes qui héritent de la classe générique: la classe « SIZ » et la classe « Mainheader ». La classe « SIZ » comporte une variable d'instance de type entier qui porte le nom « Csiz », et une variable d'instance de type chaîne de caractères qui porte le nom « data ». La classe « Mainheader » comporte une variable d'instance qui est un objet instance de la classe « SIZ » et qui porte le nom « siz ».

### En langage JAVA ces deux classes s'écrivent de la façon suivante (la classe générique porte ici le nom JElt):

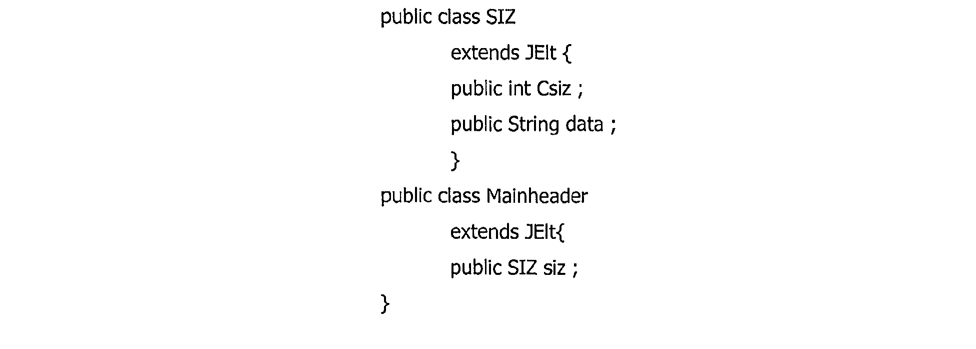

Conformément à la spécification DOM, un arbre DOM est susceptible de comporter différents types de noeuds et notamment des noeuds de type élément, des noeuds de type attribut, et des noeuds de type texte. Un noeud de type élément correspond à un élément d'un document HTML ou XML, un noeud de type attribut correspond à un attribut d'un document XML ou HTML, et un noeud de type texte correspond à un contenu d'un élément d'un document HTML ou XML.

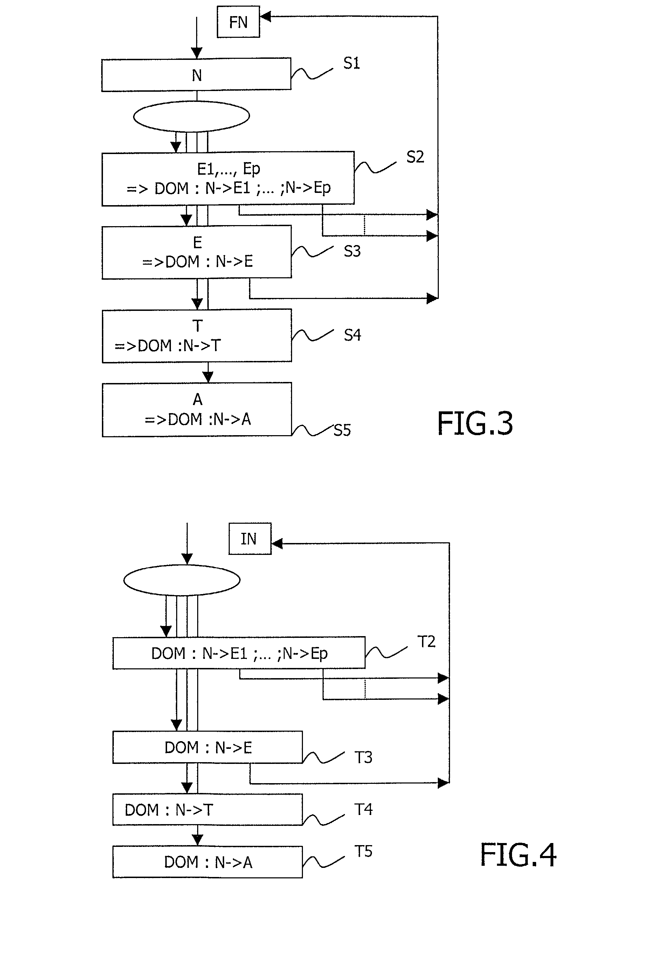

La figure 3 représente un organigramme d'une méthode générique d'écriture d'un noeud dans une interface DOM. Une telle méthode utilise comme argument le noeud DOM qui est le père du noeud à écrire (sur la figure 3, ce noeud est noté FN). Elle est destinée à être appliquée par un objet, appelé objet courant.

D'après la figure 3, une méthode générique d'écriture selon l'invention comporte une première étape S1 qui a pour but de créer un noeud N de type élément et de le nommer d'après le nom de la classe de l'objet courant. La méthode consiste ensuite à parcourir toutes les variables d'instance de l'objet courant, et à exécuter pour chaque variable d'instance l'une des étapes suivantes selon le type de la variable d'instance:
si la variable d'instance est un tableau d'objets instances d'une classe qui hérite de la classe générique JElt (étape S2) :
   - création d'une liste L de noeuds DOM E1, ..., Ep de type élément, nommés d'après le nom de ladite classe,
   - ajout des noeuds de cette liste dans l'arbre DOM, en tant que noeuds fils du noeud courant N,
   - rappel de la méthode d'écriture pour chaque noeud E1, ..., Ep ainsi ajouté.
si la variable d'instance est un objet instance d'une classe qui hérite de la classe générique JElt (étape S3) :
   - création d'un noeud DOM E de type élément, nommé d'après le nom de ladite classe,
   - ajout du noeud E créé dans l'arbre DOM, en tant que noeud fils du noeud courant N,
   - rappel de la méthode d'écriture pour le noeud E ainsi ajouté.
si la variable d'instance est une variable d'instance de type chaîne de caractères, portant le nom réservé « data » (étape S4) :
   - création d'un noeud DOM T de type texte dont la valeur est constituée par la valeur de la variable d'instance.
   dans tous les autres cas (étape S5) :
   - création d'un noeud DOM A de type attribut, nommé d'après le nom de la variable d'instance, et dont la valeur est constituée par la valeur de la variable d'instance.

La figure 4 représente un organigramme d'une méthode générique de lecture d'un noeud dans une interface DOM. Une telle méthode utilise comme argument le noeud DOM qui contient les informations à récupérer pour instancier un objet appelé objet courant (sur la figure 4 ce noeud est noté IN).

Comme indiqué sur la figure 4, une méthode générique de lecture selon l'invention consiste à parcourir toutes les variables d'instance de l'objet courant et à exécuter pour chaque variable d'instance l'une des étapes suivantes selon le type de la variable d'instance:
si la variable d'instance est un tableau d'objets instances d'une classe qui hérite de la classe générique JElt (étape T2) :
   - recherche dans l'arbre DOM de tous les noeuds DOM de type élément qui portent le nom de la classe et qui sont des noeuds fils du noeud courant (sur la figure 4 ces noeuds sont notés E1,...,Ep)
   - rappel de la méthode de lecture pour chacun de ces noeuds E1, ..., Ep.
si la variable d'instance est un objet instance d'une classe qui hérite de la classe générique JElt (étape T3) :
   - recherche dans l'arbre DOM du noeud DOM de type élément qui porte le nom de la classe et qui est un noeud fils du noeud courant (sur la figure 4 ce noeud est noté E),
   - rappel de la méthode de lecture pour ce noeud E.
si la variable d'instance est une variable d'instance de type chaîne de caractères, portant le nom réservé « data » (étape T4) :
   - recherche d'un noeud DOM de type texte qui est un fils du noeud DOM courant (sur la figure 4 ce noeud est noté T)
   - récupération de la valeur de ce noeud T pour remplir la variable d'instance courante.
   dans tous les autres cas (étape T5) :
   - recherche dans l'arbre DOM du noeud DOM de type attribut qui porte le nom de la variable d'instance courante et qui est un noeud fils du noeud courant (sur la figure 4 ce noeud est noté A),
   - récupération de la valeur de ce noeud A pour remplir la variable d'instance courante.

En annexe, on donne un exemple d'implémentation, en langage JAVA, d'une classe générique « JElt » qui comporte une méthode générique d'écriture « writeToDOM », et une méthode générique de lecture « readFromDOM ».

Sur la figure 5, on a représenté un exemple d'équipement selon l'invention. Cet équipement PX comporte un ensemble à microprocesseur MP qui contient notamment un processeur P et des mémoires MEM. Les mémoires MEM contiennent :
- une structure interne de données IDS,
- un programme P1 d'instanciation de la structure interne de données destiné à générer une représentation interne de données IDR,
- un programme d'application P2 destiné à manipuler une représentation interne de données d'entrée et à délivrer une représentation interne de données de sortie,
- un programme P3 d'écriture d'une interface à partir de ladite représentation de données de sortie.

On a décrit une structure interne de données qui comporte une classe générique contenant à la fois une méthode générique de lecture d'un noeud d'une interface, et une méthode générique d'écriture d'un noeud dans une interface. Ceci n'est pas limitatif. La classe générique peut ne comporter que l'une quelconque de ces deux méthodes.

Par ailleurs, dans le mode de réalisation qui vient d'être décrit, les interfaces sont des interfaces DOM et les documents sont des documents HTML ou XML, parce que ce sont les interfaces et les documents qui sont le plus couramment utilisés à la date de l'invention. Ceci n'est pas non plus restrictif et l'invention est en principe applicable à d'autre types d'interfaces, à d'autres types de documents, ou à des évolutions de ce type d'interfaces et de documents.

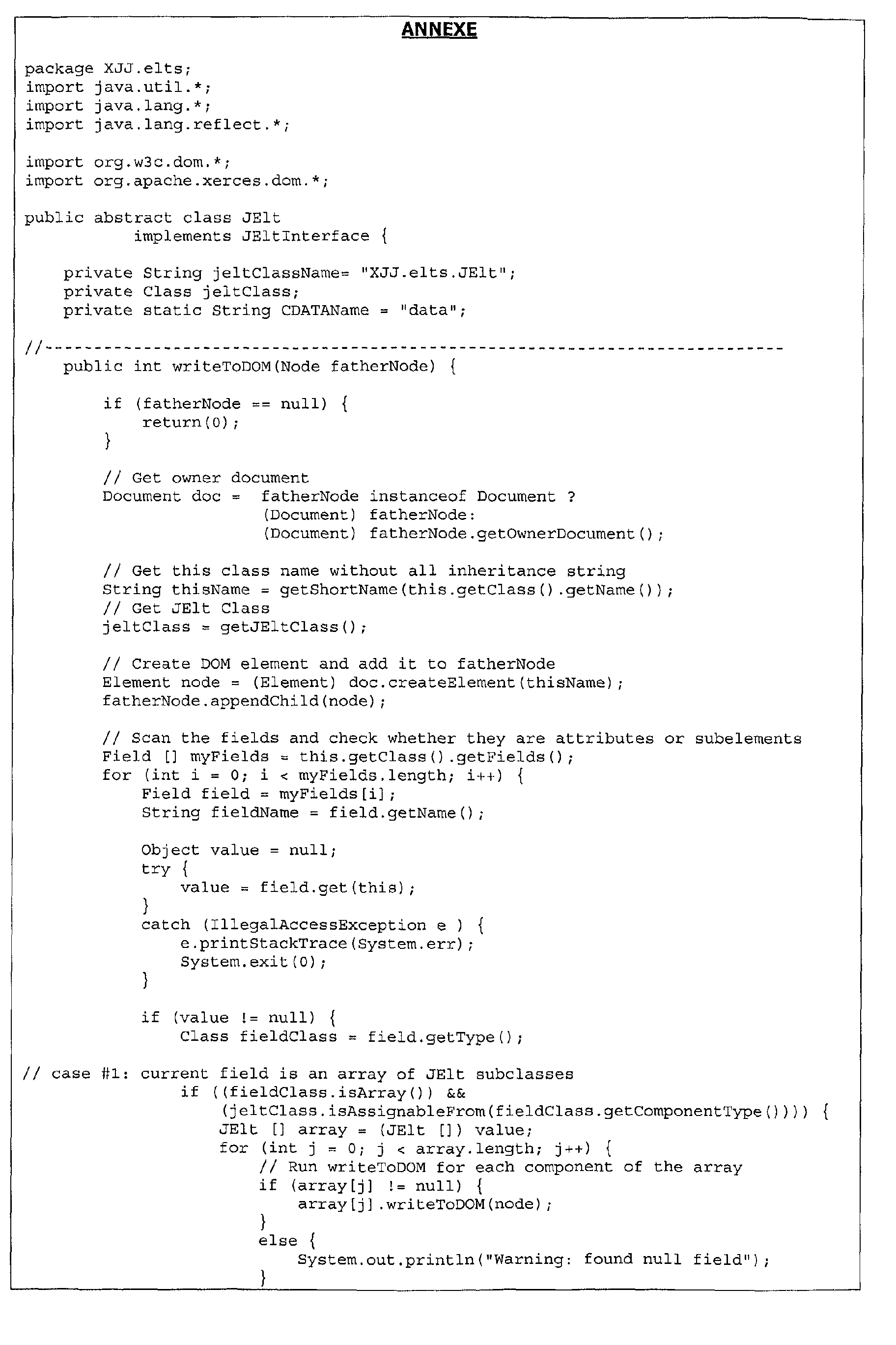

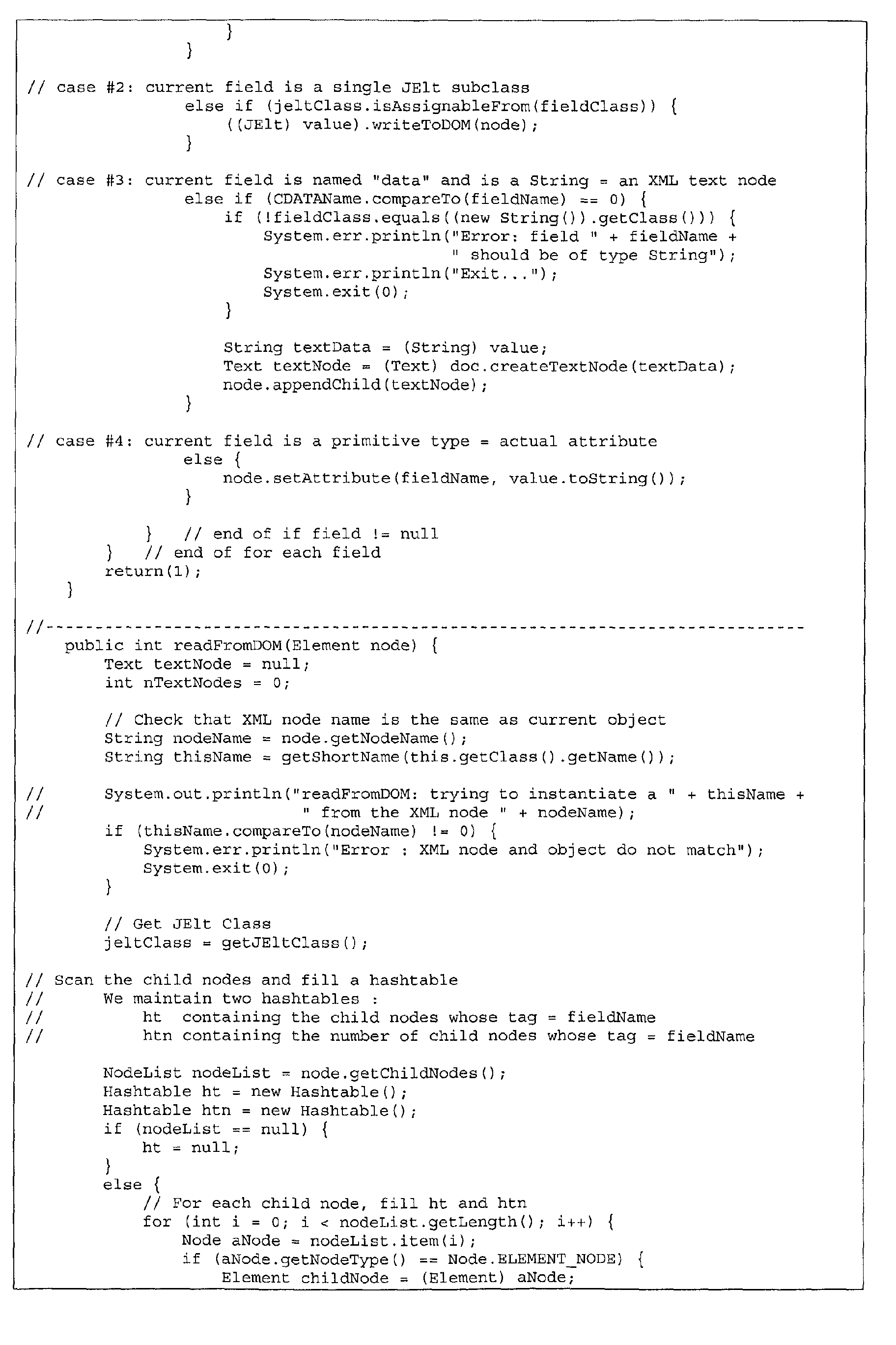

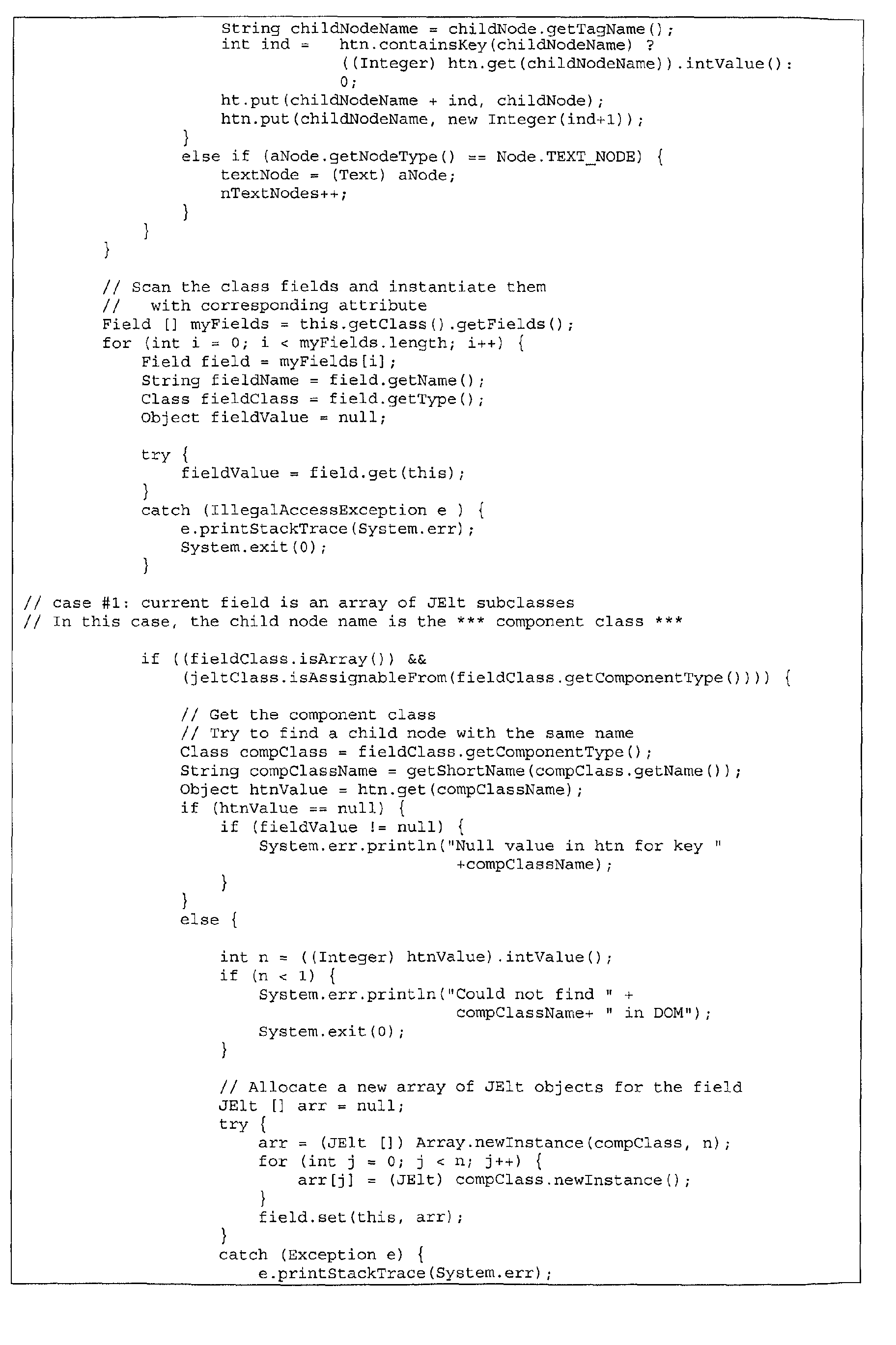

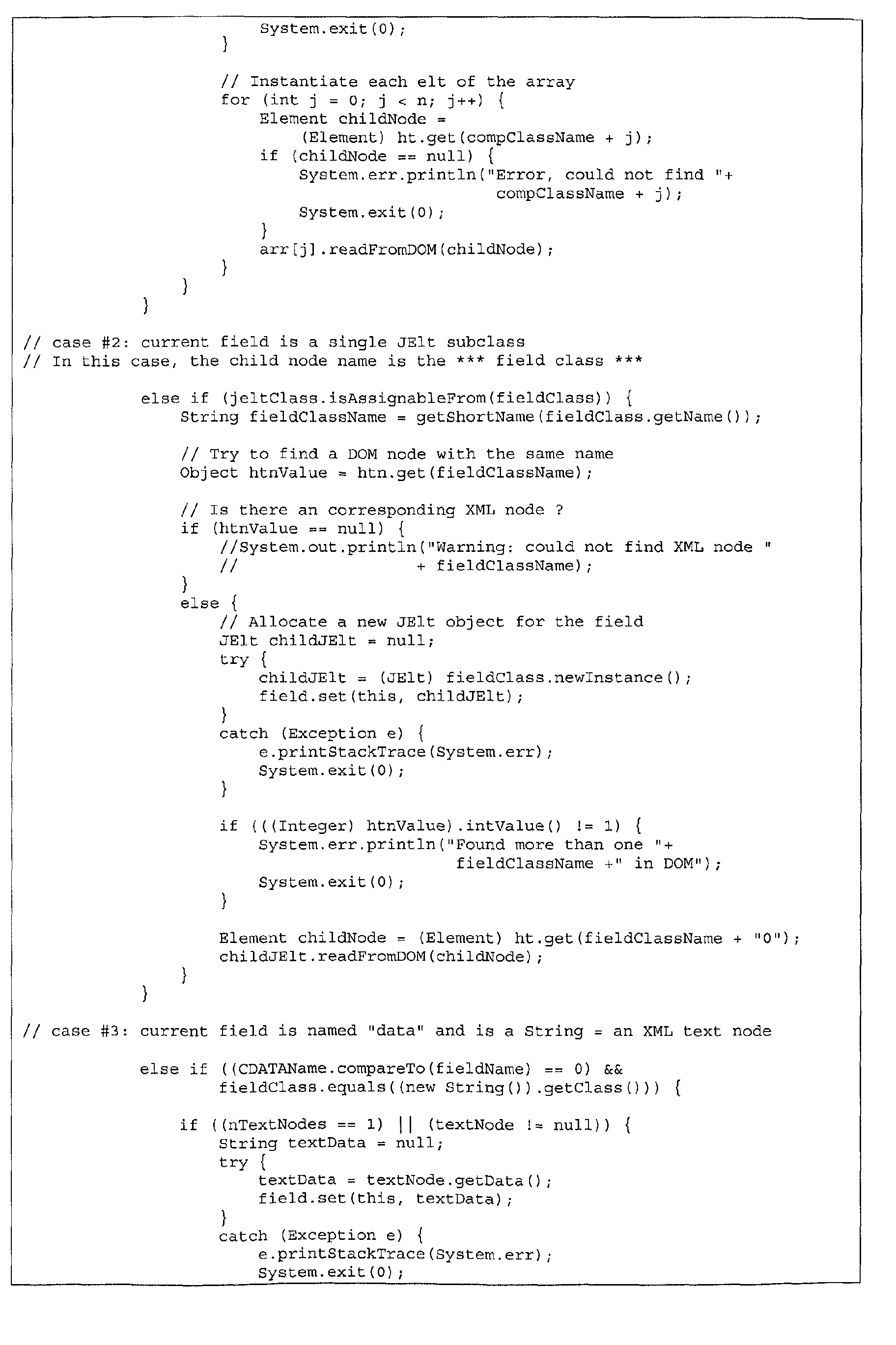

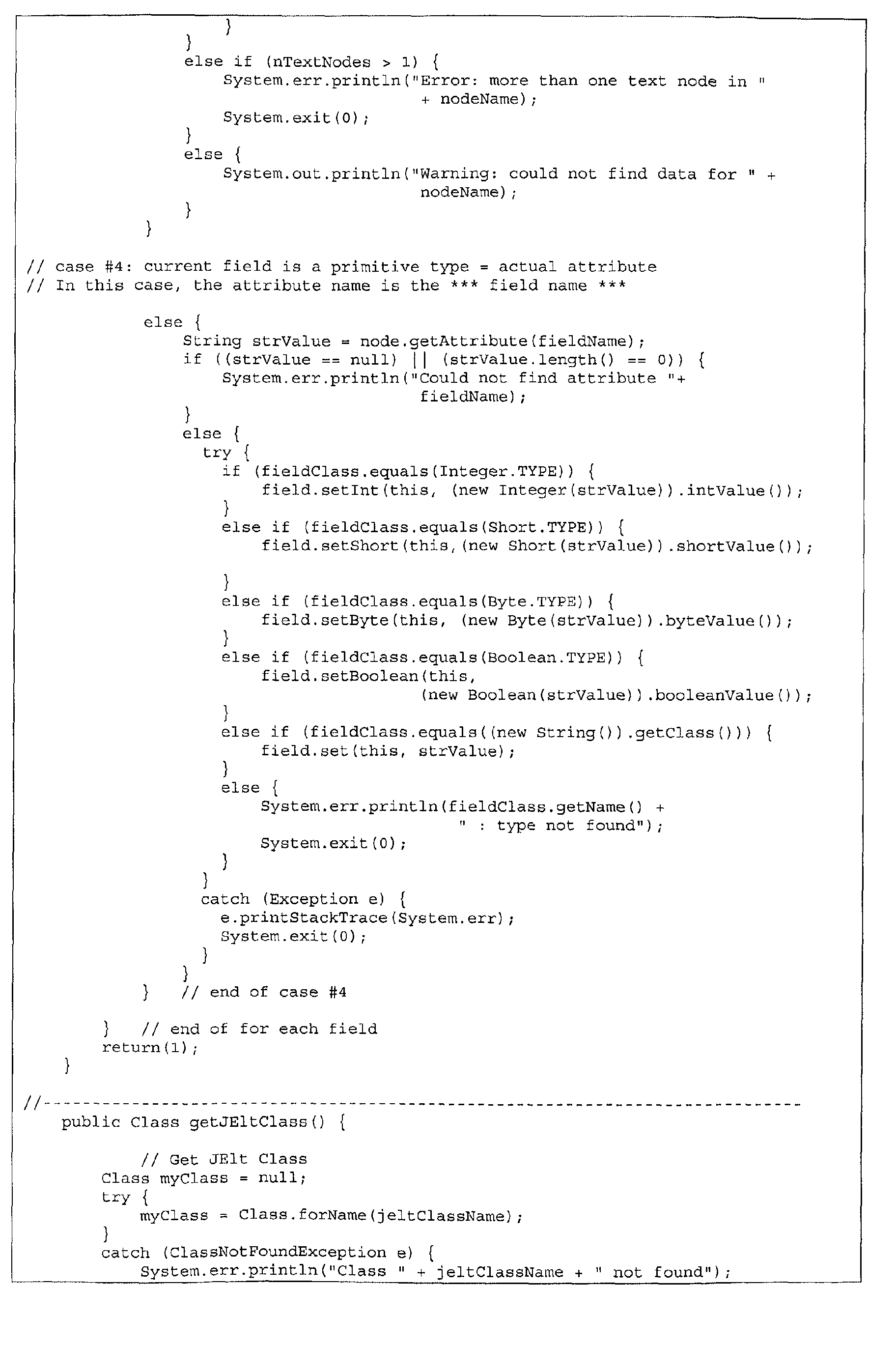

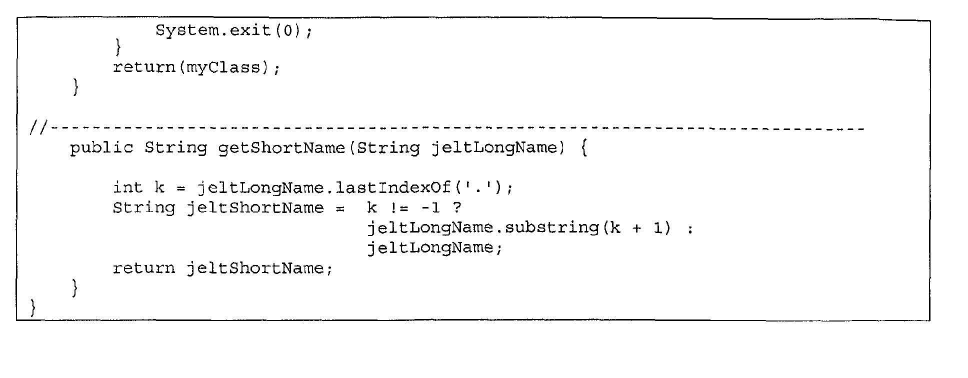

## Revendications

1. Structure interne de données écrite dans un langage de programmation objet, comportant une pluralité de classes destinées à être instanciées, pour générer une représentation interne d'un document du genre HTML ou XML faisant partie d'une famille de documents, en lisant une interface associée audit document et constituée d'une arborescence de noeuds, **caractérisée en ce que** ladite structure interne comporte :
- une classe générique qui contient au moins une méthode générique de lecture d'un noeud d'une telle interface, pour remplir un objet instance d'une classe de ladite structure interne de données,
- une ou plusieurs classes qui héritent de ladite classe générique et qui obéissent à des règles de dénomination et de correspondance établies par rapport à ladite famille de documents, lesdites règles de dénomination et de correspondance étant utilisées par ladite méthode générique de lecture pour lire ladite interface.

2. Structure interne de données écrite dans un langage de programmation objet, comportant une pluralité de classes destinées à être instanciées pour générer une représentation interne de données manipulable par un programme d'application qui est lui-même destiné à écrire une interface pour un document du genre HTML ou XML faisant partie d'une famille de documents, ladite interface étant constituée d'une arborescence de noeuds, **caractérisée en ce que** ladite structure interne de données comporte :
- une classe générique qui contient une méthode générique d'écriture d'un noeud dans une telle interface, à partir d'une instance d'une classe de ladite structure interne de données,
- une ou plusieurs classes qui héritent de ladite classe générique et qui obéissent à des règles de dénomination et de correspondance établies par rapport à ladite famille de documents, lesdites règles de dénomination et de correspondance étant utilisées par ladite méthode générique d'écriture pour écrire ladite interface.

3. Structure interne de données selon l'une des revendications 1 ou 2 **caractérisée en ce que**, lesdits documents du genre HTML ou XML comportant un ou plusieurs éléments qui comportent un ou plusieurs sous-éléments et/ou un ou plusieurs attributs et/ou du contenu, la ou lesdites classes comportent une ou plusieurs variables d'instance et obéissent aux règles de dénomination et de correspondance suivantes:
- une classe de ladite structure interne correspond à un élément d'un document du genre HTML ou XML, ladite classe et ledit élément ayant un même nom,
et dans ladite classe :
- une variable d'instance ayant un nom réservé correspond au contenu dudit élément,
- une variable d'instance constituée par un objet instance d'une classe héritant de la classe générique, correspond à un sous-élément dudit élément, ledit sous-élément et la classe dont l'objet est une instance ayant un même nom,
- une variable d'instance constituée par un tableau d'objets instances d'une classe héritant de la classe générique, correspond à une liste de sous-éléments dudit élément, lesdits sous-éléments et la classe dont les objets sont des instances ayant un même nom,
- les autres variables d'instance correspondent à des attributs dudit élément, un attribut et la variable d'instance à laquelle il correspond ayant un même nom.

4. Procédé d'écriture d'une interface pour un document du genre HTML ou XML à partir d'une représentation interne de données qui est une instance d'une structure interne de données selon la revendication 2, ledit procédé d'écriture consistant à parcourir ladite représentation interne de données objet par objet, et à appliquer ladite méthode générique d'écriture à chaque objet de ladite représentation.

5. Procédé d'écriture d'une interface pour un document du genre HTML ou XML à partir d'une représentation interne de données qui est une instance d'une structure interne de données selon la revendication 3, ledit procédé d'écriture consistant à parcourir ladite représentation interne de données objet par objet, et à appliquer ladite méthode générique d'écriture à chaque objet de ladite représentation.

6. Programme comportant des instructions permettant de mettre en oeuvre un procédé selon la revendication 4 d'écriture d'une interface pour un document du genre HTML ou XML, lorsque ledit programme est exécuté par un processeur.

7. Equipement électronique comportant des moyens de mise en oeuvre d'un procédé selon la revendication 3 d'écriture d'une interface pour un document du genre HTML ou XML.

8. Procédé d'instanciation d'une structure interne de données selon la revendication 1 à partir d'une interface associée à un document du genre HTML ou XML, pour générer une représentation interne dudit document, ledit procédé d'instanciation consistant à parcourir ladite structure interne de données classe par classe, pour instancier lesdites classes en appliquant ladite méthode générique de lecture à chaque objet instancié.

9. Procédé d'instanciation d'une structure interne de données selon la revendication 3 à partir d'une interface associée à un document du genre HTML ou XML, pour générer une représentation interne dudit document, ledit procédé d'instanciation consistant à parcourir ladite structure interne de données classe par classe, pour instancier lesdites classes, en appliquant ladite méthode générique de lecture à chaque objet instancié.

10. Programme comportant des instructions permettant de mettre en oeuvre un procédé selon la revendication 8 d'instanciation d'une représentation interne de données, lorsque ledit programme est exécuté par un processeur.

11. Equipement électronique comportant des moyens de mise en oeuvre d'un procédé selon la revendication 8 d'instanciation d'une représentation interne de données.
